# EUROPÄISCHE PATENTSCHRIFT

(11) **EP 4 371 723 B1**
(45) Veröffentlichungstag und Bekanntmachung des Hinweises auf die Patenterteilung: **18.11.2026**
(21) Anmeldenummer: 23205901.4
(22) Anmeldetag: 25.10.2023
(51) Int. Cl.: B29C 33/00, B29C 33/14, B29C 45/43, B29C 45/14, B29C 45/17, B29L 31/00

(54) **GIESSFORM ZUR HERSTELLUNG EINES EINE VORDER- UND EINE RÜCKSEITE AUFWEISENDEN GIESSKÖRPERS AUS EINER AUSHÄRTBAREN GIESSMASSE**
CASTING MOULD FOR PRODUCING A CASTING BODY WITH A FRONT SIDE AND A REAR SIDE FROM A CURABLE CASTING MASS
MOULE POUR LA FABRICATION D'UN CORPS COULÉ PRÉSENTANT UNE FACE AVANT ET UNE FACE ARRIÈRE À PARTIR D'UNE MASSE DE COULÉE DURCISSABLE

(30) Priorität: 21.11.2022 DE 102022130760
(43) Veröffentlichungstag der Anmeldung: 22.05.2024
(73) Patentinhaber: Schock GmbH, 94209 Regen (DE)
(72) Erfinder: PATERNOSTER, Herr Rudolf, 94269 Rinchnach (DE); PROBST, Herr Alois, 94209 Regen (DE); PLEDL, Herr Xaver, 94227 Zwiesel (DE); Müller, Herr Markus, 94209 Regen (DE)
(74) Vertreter: Lindner Blaumeier Patent- und Rechtsanwälte

(56) Entgegenhaltungen:
- EP-A1- 3 326 778
- EP-B1- 1 237 694
- WO-A2-2005/058574
- DE-A1- 102009 021 413
- US-A- 5 849 237

## Beschreibung

Die Erfindung betrifft eine Gießform zur Herstellung eines eine Vorder- und eine Rückseite aufweisenden Gießkörpers, wie Waschbecken, Duschtasse, Küchenspüle und Ähnliches, aus einer aushärtbaren Gießmasse, mit zumindest einem die Vorderseite formenden ersten Formteil und einem die Rückseite formenden zweiten Formteil, die zusammen einen Gießhohlraum begrenzen.

Eine solche Gießform, wie sie beispielsweise aus EP 1 237 694 B1 bekannt ist, dient der Herstellung von Gießkörpern aus einer aushärtbaren Gießmasse, die bevorzugt eine Polymermatrix sowie darin eingebrachte Füllstoffe zur Herstellung von Komposit-Gießkörpern aufweist. Ein Beispiel für hierüber herstellbare Gießkörper sind Küchenspülen, die eine entsprechend komplexe, dreidimensionale Form aufweisen, die über den Gießhohlraum respektive die Form der beiden Metalllagen abgebildet wird. Aber auch andere Gießkörper wie beispielsweise Waschbecken, Duschtassen und Ähnliches können über eine solche Gießform hergestellt werden. Eine Gießform mit Schiebertechnik ist beispielsweise in WO 2005/058574 A2 offenbart.

Zur Herstellung des Gießkörpers wird die Gießmasse in einen Gießhohlraum eingebracht, der über zwei Formteile begrenzt wird. Das erste Formteil dient der Ausformung der Vorderseite des Gießkörpers, das zweite Formteil der Ausformung der Rückseite.

Bei der Gießmasse handelt es sich um eine aushärtbare Reaktionsmasse, beispielsweise eine auf Polyacrylat oder Polymethacrylat basierende Reaktionsmasse. Die Reaktionsmasse wird unter Druck mit mehreren bar in den Gießhohlraum eingebracht, um sicherzustellen, dass sich dieser vollständig füllt, wonach der Polymerisationsprozess gestartet wird. Hierzu wird bei der aus EP 1 237 694 B1 bekannten Gießform über eine Heizeinrichtung Wärme eingebracht, was zu einer Erwärmung der Gießmasse führt. Hierzu ist bei der bekannten Gießform eine die Vorderseite ausbildende erste Metalllage am ersten Formteil vorgesehen, die über die Heizeinrichtung erwärmt wird, so dass zwangsläufig auch die Gießmasse erwärmt wird, die daran anliegt. Wird die Gießmasse über die Polymerisationstemperatur erwärmt, so setzt die exotherme Polymerisationsreaktion ein, wobei sich die Polymerisationsfront sukzessive durch die Gießmasse zur gegenüberliegenden zweiten Metalllage bewegt. Hierbei kommt es reaktionsbedingt zu einer Volumenverringerung der reagierenden, aushärtenden Gießmasse, also zu einem Schrumpfen respektive einem Schwund des Polymermaterials. Um zu vermeiden, dass sich schrumpfungsbedingt die sich ausbildende Seite respektive Fläche des Gießkörpers von der jeweiligen, an beiden Formteilen vorgesehenen Metalllage löst, was zu Oberflächenfehlern führen kann, ist eine Schrumpfungskompensation bei der bekannten Gießform vorgesehen, indem eine der beiden Metalllagen, dort die die Rückseite ausformende Metalllage, beweglich gelagert ist, so dass die Metalllage der schwindenden Gießmasse bzw. dem schwindenden Gießkörper nachgeführt werden kann und eine permanente flächige Anlage der Gießmasse bzw. des Gießkörpers an der beweglichen Metalllage sichergestellt ist. Bekannt ist es auch, Gießformen zu verwenden, deren Formteile zur Schrumpfungskompensation relativ zueinander bewegt werden können. Insbesondere für Gießmassen, die bei Umgebungstemperatur bereits aushärten, werden auch Gießformen eingesetzt, die aus einem GFK-Trägerkörper mit einer oberflächlichen Kunststoffschicht bestehen.

Häufig ist bei einem mit einer solchen Gießform hergestellten Gieß- oder einem Formkörper die Ausbildung einer Durchbrechung, beispielsweise eines Ablauflochs im Falle einer Küchenspüle, einer Duschtasse oder eines Waschbeckens erforderlich. Hierzu wird der mit der Gießform hergestellte, fertige Formkörper mechanisch nachbearbeitet, indem mit einem geeigneten Werkzeug die entsprechende, zumeist kreisrunde, Durchbrechung hergestellt wird, der Formkörper wird also entsprechend ausgebohrt. Diese mechanische Nachbearbeitung des durchgängig, also geschlossen gegossenen Formkörpers ist umständlich, zeitaufwändig und kostenintensiv.

Der Erfindung liegt das Problem zugrunde, eine verbesserte Gießform anzugeben, die das Ausbilden einer solchen Durchbrechung bereits im Guss ermöglicht.

Zur Lösung dieses Problems ist eine Gießform der eingangs genannten Art gekennzeichnet durch eine an einem der Formteile vorgesehene Schiebeeinrichtung umfassend einen in den Gießhohlraum einfahrbaren Schieberabschnitt, an dem ein lösbares Einlegeteil angeordnet oder anordbar ist, das gegen das gegenüberliegende Formteil in Anlage daran bewegbar und in die aushärtende Gießmasse einbettbar ist, und das sich beim Zurückbewegen des Schieberabschnitts von diesem löst.

Die erfindungsgemäße Gießform zeichnet sich durch eine an einem Formteil, bevorzugt dem die Vorderseite ausbildenden Formteil, vorgesehene Schiebeeinrichtung aus, die einen bewegbaren Schieberabschnitt aufweist, der in den Gießhohlraum eingefahren und aus diesem zurückbewegt werden kann. An diesem Schieberabschnitt ist ein lösbares Einlegeteil angeordnet, das zusammen mit dem Schieberabschnitt in den Gießhohlraum eingefahren und über die Schiebereinrichtung in direkte Anlage an das gegenüberliegende Formteil gebracht werden kann.

Im Rahmen der Herstellung befindet sich die Schiebereinrichtung respektive der Schieberabschnitt mit dem daran angeordneten Einlegeteil in der zurückgefahrenen Nichtarbeitsposition, das heißt, dass der Schieberabschnitt samt Einlegeteil nicht in den Gießhohlraum in eine Arbeitsposition eingefahren respektive das Einlegeteil nicht in Anlage an dem gegenüberliegenden Formteil ist. Dies ermöglicht es, die fluide Gießmasse problemlos in den Gießhohlraum einzubringen und diesen komplett zu füllen. Nach der Befüllung des Gießhohlraums mit der Gießmasse wird die Schiebereinrichtung über eine entsprechende Steuerungseinrichtung angesteuert, so dass der Schieberabschnitt samt Einlegeteil ausgefahren wird und in die eigentliche Arbeitsposition gebracht wird, in der das Einlegeteil an dem gegenüberliegenden zweiten Formteil anliegt. Über das Einlegeteil wird demzufolge beim Verfahren in die Arbeitsposition die Gießmasse verdrängt, es liegt in der Arbeitsposition unmittelbar am zweiten Formteil an, so dass sich im Anlagebereich kaum Gießmasse befindet, das Einlegeteil jedoch vollständig seitlich von der Gießmasse umschlossen ist. Das heißt, dass über das Einlegeteil die entsprechende Durchbrechung, die am fertigen Formteil vorgesehen sein soll, definiert wird.

Nach dem Ausfahren und Bewegen des Einlegeteils in die Arbeitsposition erfolgt der eigentliche Polymerisations- respektive Aushärtevorgang der Gießmasse, wozu beispielsweise ein die Polymerisation initiierender Wärmeeintrag erfolgt, beispielsweise über eine entsprechende Metalllage, wobei beispielsweise an beiden Formteilen entsprechende, den Gießhohlraum begrenzende Metalllagen vorgesehen sind. Nach Abschluss der Polymerisation, wenn also die gesamte Gießmasse durchpolymerisiert ist, wird die Form geöffnet und der polymerisierte Formkörper wird entformt. Das Formteil kühlt außerhalb der Form auf Raumtemperatur ab und härtet final aus. Kurz vor dem Öffnen der Form fährt die Schiebereinrichtung wieder zurück, das heißt, der Schieberabschnitt wird eingefahren. Hierbei löst sich das Einlegeteil vom Schieberabschnitt, es ist wie beschrieben fest in die ausgehärtete Gießmasse eingebettet und darin verankert, so dass die vormalige Fixierung am Schieberabschnitt beim Zurückfahren desselben problemlos aufgelöst werden kann. Der ausgehärtete Formkörper samt dem eingebetteten Einlegeteil wird sodann, bevorzugt mittels Pressluft, entformt, also vom ersten Formteil entnommen, wonach es lediglich noch erforderlich ist, das im Formkörper verbliebene Einlegeteil aus dem Formkörper zu nehmen. Dies ist problemlos möglich, da die Kontaktfläche zwischen dem Einlegeteil und dem Formkörper aufgrund der dünnen Wandstärke des Formkörpers, also beispielsweise der Küchenspüle oder dem Waschbecken oder der Duschtasse, relativ gering ist, so dass sich nur eine geringe Haftung zwischen Einlegeteil und Formkörper einstellt. Diese kann noch weiter verringert werden, wenn das Einlegeteil aus einem Material ist, das möglichst gering bis gar nicht an der ausgehärteten Gießmasse haftet. Beispielsweise kann das Einlegeteil mit einem Hammer herausgeschlagen oder sonst wie herausgedrückt werden. Außerdem wird das Entnehmen des Einlegeteils durch die unterschiedlichen Ausdehnungskoeffizienten zwischen Formkörper und Einlegeteil erleichtert.

Die erfindungsgemäße Gießform erlaubt folglich das einfache Ausbilden einer Durchbrechung bereits während des Gusses, so dass eine aufwändige mechanische Nachbearbeitung, abgesehen von dem einfachen Herausnehmen des Einlegeteils, nicht erforderlich ist. Dadurch, dass das Einlegeteil an dem Schieberabschnitt angeordnet ist und erst über diesen in die Arbeitsposition, den Gießhohlraum begrenzend, gebracht wird, steht weder der Schieberabschnitt noch das Einlegeteil der Hohlraumbefüllung entgegen, so dass sichergestellt ist, dass der Gießhohlraum bestmöglich befüllt wird, was nicht der Fall wäre, wenn das Einlegeteil vor dem Schließen der Formhälften positioniert und bereits beim Befüllen im Gießhohlraum wäre. Auch kann durch die Kombination des Schieberabschnitts und des daran angeordneten Einlegeteils sichergestellt werden, dass eine hinreichende Dichtheit gegeben ist, die ein ungewolltes Eindringen der Gießmasse in Spalte und dergleichen verhindert. Und schließlich wird über die Lösbarkeit des Einlegeteils sichergestellt, dass beim Zurückbewegen in die Nichtarbeitsposition keine Probleme entstehen, was möglicherweise der Fall wäre, wenn das Einlegeteil noch am Schieberabschnitt wäre.

Gemäß einer zweckmäßigen Weiterbildung kann vorgesehen sein, dass das die Schiebereinrichtung aufweisende Formteil an der den Gießhohlraum begrenzenden Seite eine Vertiefung aufweist, in der der Schieberabschnitt aufgenommen ist und aus der der Schieberabschnitt zumindest abschnittsweise heraus bewegbar ist. Das Formteil weist also eine entsprechende, den Schieberabschnitt und zweckmäßigerweise auch das Einlegeteil aufnehmende Vertiefung auf, die beispielsweise an einer etwaigen, dort vorgesehenen Metalllage ausgebildet sein kann. Dadurch, dass der Schieberabschnitt samt Einlegeteil in der Vertiefung in der Nichtarbeitsposition aufgenommen ist, ist sichergestellt, dass der freie Querschnitt des Gießhohlraums in keinem Fall hierüber eingeschränkt ist, was dem Befüllen förderlich ist, nachdem der Strömungsweg der Gießmasse weder durch den Schieberabschnitt noch das Einlegeteil behindert wird. Der freie Querschnitt des Gießhohlraums ist folglich offen.

Dabei kann der Schieberabschnitt ein umlaufendes und zur Wand der Vertiefung hin abdichtendes Dichtelement aufweisen, beispielsweise eine entsprechende Ringdichtung. Hierüber wird eine entsprechende Abdichtebene bereits zwischen dem Schieberelement und dem Formteil gebildet, über die sichergestellt wird, dass ein ungewolltes Einfließen der Gießmasse verhindert wird.

Das Einlegeteil selbst kann eine Bodenplatte und einen randseitig daran anschließenden, umlaufenden Flansch aufweisen, wobei in der Montagestellung die Bodenplatte auf einer Tragfläche des Schieberabschnitts aufsitzt und der Flansch in einen umlaufenden Aufnahmefalz des Schieberabschnitts eingreift und zumindest abschnittsweise in der Vertiefung aufgenommen ist. Das Einlegeteil ist demzufolge topf- oder trogartig ausgeführt und weist eine zumindest an der zur anderen Formhälfte weisenden, daran anlaufenden Seite ebene Bodenplatte auf, die beispielsweise rund oder viereckig ist, von welcher Bodenplatte ein entsprechender Flansch, beispielsweise ein Ringflansch oder eben ein umlaufender rechteckiger Flansch, abragt. Die Bodenplatte sitzt auf einer entsprechenden Tragfläche des Schieberabschnitts flächig auf, so dass sie entsprechend druckvoll gegen die andere Formhälfte gedrückt werden kann. Der Flansch hingegen greift in einen entsprechenden Falz am Schieberabschnitt ein und ist zumindest in der Nichtarbeitsposition, vorzugsweise aber auch in der Arbeitsposition, zumindest abschnittsweise auch in der entsprechenden Vertiefung zusammen mit dem Schieberabschnitt aufgenommen. Da der Schieberabschnitt einen Falz aufweist, der zur Seite hin offen ist, ist der Flansch dementsprechend unmittelbar benachbart zur Vertiefungswand, so dass auch in diesem Bereich eine Art Dichtsitz realisiert werden kann.

Bevorzugt ist die Vertiefung und der Schieberabschnitt zylindrisch, wobei dann das Einlegeteil eine runde Bodenfläche und einen Ringflansch aufweist, der in einen Ringfalz des Schieberabschnitts eingreift. Dies ist die bevorzugte, übliche Bauform, nachdem üblicherweise entsprechende Ablaufdurchbrechungen kreisrund sind. Dabei kann der Ringflansch eine leichte Konizität aufweisen, sich also minimal zur freien Seite hin verjüngen, was das Einsetzen in die Vertiefung erleichtert. Ein Öffnungswinkel von z.B. 0,5 - 1,5° ist zweckmäßig.

Alternativ kann die Vertiefung und der Schieberabschnitt eine von einer Kreisform abweichende Querschnittsform aufweisen, wobei das Einlegeteil eine dieser Querschnittsform entsprechend geformte Bodenplatte und einen Flansch aufweist, der in einen Aufnahmefalz des Schieberabschnitts eingreift. Die Querschnittsform kann beliebig, von einer Kreisform abweichen, also beliebig sein, z.B. mehreckig, also drei-, vier- oder fünfeckig, oder oval. Entsprechend ist die Form des Einlegeteils ausgebildet. Der hier vorgesehene, der Vertiefungsform entsprechende Flansch kann auch hier eine leichte Konizität aufweisen.

Zweckmäßigerweise liegt die Bodenplatte in der Nichtarbeitsposition bündig mit einer die Vertiefung begrenzenden Randfläche der den Gießhohlraum begrenzenden Seite des Formteils, gegebenenfalls auch der bereits beschriebenen Metallplatte, angeordnet. Das heißt, dass über die Bodenplatte die Formfläche auch im Bereich der Vertiefung fortgesetzt respektive definiert wird, soweit es das Befüllen angeht.

Eine zweckmäßige Weiterbildung der Erfindung sieht vor, dass der Flansch, insbesondere der Ringflansch, zumindest in der an dem anderen Formteil anliegenden Position des Einlegeteils in Dichtanlage an der Wand der, vorzugsweise zylindrischen oder anderweitig geformten, Vertiefung anliegt. Es wird also demgemäß eine echte Dichtanlage zwischen Einlegeteilflansch und Vertiefungswand realisiert, so dass eine zusätzliche Dichtebene realisiert wird.

Dabei kann der Falz eine Fase aufweisen, an der der Flansch mit seinem freien Ende anliegt, wobei der Flansch beim Bewegen des Schieberabschnitts in Richtung des anderen Formteils oder bei Anlaufen gegen das andere Formteil an der Fase des Falzes abgleitet und sich umlaufend gegen die Wand aufweitet. Über diese Fasengeometrie wird sichergestellt, dass der Flansch zwingend in eine feste Dichtanlage an die Wand der Vertiefung gedrückt wird, egal welche konkrete Form die Vertiefung und der Schieberabschnitt sowie das Einlegeteil aufweisen. Das quasi topfartige Einlegeteil wird derart auf den Schieberabschnitt aufgesetzt, dass es zunächst mit der freien Kante des Flansches an der Fase des Schieberabschnitts anliegt. Wird nun, nachdem der Gießhohlraum befüllt ist, der Schieberabschnitt samt Einlegeteil ausgefahren, so baut sich ein Druck auf das Einlegeteil respektive die Bodenplatte, die wie gesagt in die Gießmasse eingedrückt wird, auf, so dass das Einlegeteil geringfügig weiter axial auf den Schieberabschnitt aufgedrückt wird. Hierbei gleitet der Flansch geringfügig auf der Fase nach außen hin ab und wird umlaufend nach außen geweitet, so dass er in eine dichte Anlage gegen die Vertiefungswand gepresst wird. Diese Bewegung des Einlegeteils kann bereits während des Drückens durch die Gießmasse erfolgen, oder aber auch erst, wenn es gegen das andere Formteil läuft.

Um ein einfaches Aufweiten zu erreichen, ist zweckmäßigerweise die Wandstärke des Flansches, sei er zylindrisch, eckig oder oval, an seinem freien Ende, im Bereich dessen der Flansch auf dem Falz des Schieberabschnitts aufliegt, reduziert.

Eine zweckmäßige Weiterbildung der Erfindung sieht vor, dass die Vertiefung, gleich wie sie geformt ist (zum Beispiel zylindrisch, eckig oder oval), am zum Gießhohlraum weisenden Ende eine umlaufende Dichtkante aufweist, die am eingesetzten Einlegeteil abdichtend anliegt. Diese Kante ragt marginal in die Vertiefung, so dass sie gegen das Einlegeteil drückt respektive anliegt.

Dabei kann das Einlegeteil an seiner in der am anderen Formteil anliegenden Position weisenden Außenkante eine Fase aufweisen. Hierdurch wird die Entformung des fertigen Formteils erleichtert. Zum Entformen wird Pressluft mit mehreren bar, zumeist ca. 8 bar, über die Schiebereinrichtung an den Schieberabschnitt respektive das Einlegeteil gelegt, von wo aus sie unter das gegossene Formteil strömt und dieses von der die Schiebereinrichtung aufweisenden Formhälfte ablöst. Da dieses Entformen erfolgt, nachdem bereits die obere Formhälfte abgenommen ist, mithin also der Formkörper quasi freiliegt, wird über diese Fase, die zwangsläufig mit ausgehärteter, einen umlaufenden Rand bildenden Gießmasse gefüllt ist, die wiederum ein Widerlager für das Einlegeteil bildet, sichergestellt, dass das Einlegeteil durch den beachtlich hohen Druck nicht aus dem Formteil quasi herausgeschossen wird. Der quasi ausgegossene Hinterschnitt ist ausreichend, dies zu verhindern. Die Fase sollte beispielsweise eine Breite von ca. 0,5 - 2 mm und einen Fasenwinkel von 35° - 55°, aufweisen, bevorzugt eine Breite von 1 mm und einen Fasenwinkel von 45°. Die Schiebereinrichtung kann in Weiterbildung der Erfindung auch als Auswerfereinrichtung zum Abheben des ausgehärteten Gießkörpers vom Formteil dienen. Das heißt, dass zusätzlich zur eingebrachten Pressluft auch die Schiebereinrichtung angesteuert wird und der Schieberabschnitt angehoben wird, so dass auch aktiv das gegossene Formteil abgehoben wird. Hierzu kann an der Schiebereinrichtung eine Druckluftverteileinrichtung vorgesehen sein, über die Druckluft an die auf dem Schieberabschnitt aufsitzende Unterseite des Einlegeteils führbar ist.

Das Einlegeteil selbst ist bevorzugt aus Kunststoff, insbesondere aus Polypropylen. Das Einlegeteil muss eine entsprechende thermische und chemische Beständigkeit gegenüber der Gießmasse aufweisen, gleichzeitig sollte es auch so wenig wie möglich an der Gießmasse respektive dem ausgehärteten Formteil haften. Hier hat sich Kunststoff als taugliches Material erwiesen, wobei insbesondere Polypropylen bevorzugt wird. Dies auch deshalb, als das Einlegeteil wie ausgeführt beispielsweise mit einem Hammer herausgeklopft wird und gegebenenfalls kein weiteres Mal verwendet werden kann. Darüber hinaus ist bevorzugt der Ausdehnungskoeffizient des Einlegeteilmaterials deutlich größer als der der Gießmasse respektive des Gussteils, so dass das Einlegeteil während des Abkühlens marginal schrumpft und sich geringfügig von dem Formteil löst, was das Entnehmen des Einlegeteils erleichtert.

Schließlich kann vorgesehen sein, dass das erste Formteil eine den Gießhohlraum begrenzende erste Metalllage und das zweite Formteil eine den Gießhohlraum begrenzende zweite Metalllage aufweist, wie bereits vorstehend optional beschrieben, und wie auch aus EP 1 237 694 B1 bekannt. Bei diesen Metalllagen handelt es sich bevorzugt um dünne Nickelbleche. Die Vertiefung ist dann zweckmäßigerweise in einer der beiden Metalllagen, je nachdem, an welchem der beiden Formteile die Schiebereinrichtung vorgesehen ist, ausgebildet.

Zumindest eine oder die Metalllage des Formteils, gegen das das Einlageteil bewegt wird, kann ferner zur Veränderung des Gießhohlraumvolumens zumindest abschnittsweise verformbar sein. Über diese Verformung der Metalllage kann ein Schwundausgleich, der beim Aushärten der Gießmasse einsetzt, kompensiert werden, nachdem die Metalllage entsprechend verformbar und damit nachführbar ist. Es ist demzufolge ein kontinuierlicher Kontakt der aushärtenden Gießmasse mit beiden Metalllagen sichergestellt. Alternativ kann auch wenigstens ein Formteil relativ zum anderen Formteil zur Veränderung des Gießhohlraumvolumens bewegbar sein. Hier wird zum Schwundausgleich eine aktive Relativbewegung beider Formteile zueinander über geeignete Stellmittel vorgenommen, eine Bewegung einer Metalllage erfolgt hier nicht.

Dabei kann gemäß einer besonders vorteilhaften Weiterbildung der Erfindungsvariante mit der beweglichen Metalllage das Formteil eine flächige Zwischenlage aus einem elastisch verformbaren und komprimierbaren Material aufweisen, gegen die die Metalllage des Formteils unter Aufbau einer Rückstellkraft seitens der sich verformenden Zwischenlage bewegbar ist. Demgemäß ist als fester, integrierter Bestandteil eines der beiden Formteile eine flächige Zwischenlage aus einem elastisch verformbaren und komprimierbaren Material, beispielsweise einem Moosgummi, vorgesehen. Diese flächige Zwischenlage respektive das Lagenmaterial ist in der Lage, einerseits bei entsprechendem Druck komprimiert zu werden, welcher Druck über die eingebrachte Gießmasse aufgebaut wird, andererseits aber auch bei einer Druckentlastung sich wieder zurückzustellen. Das heißt, dass bei einer Komprimierung eine Rückstellkraft aufgebaut wird, die geeignet ist, die Zwischenlage wieder in die Ausgangsform zu überführen. Erfindungsgemäß ist eine der beiden Metalllagen gegen diese elastische und komprimierbare Zwischenlage bewegbar, nämlich die Metalllage, gegen die das Einlegeteil bewegt wird. Das Einlegeteil wird über die Schiebereinrichtung gegen diese bewegliche Metalllage gedrückt, wobei die Schiebereinrichtung diese Rückstellbewegung der Metalllage entsprechend nachvollziehen kann, so dass hierüber die Rückstellung und damit der Schwindungsausgleich über die bewegliche Metalllage nicht behindert wird.

Wie beschrieben, wird die fluide Gießmasse unter Druck mit beispielsweise 2 - 5 Bar in den Gießhohlraum eingebracht. Dieser hohe Druck im Gießhohlraum führt nun dazu, dass die über die elastische und komprimierbare Zwischenlage letztlich bewegbare Metalllage aus ihrer Ausgangsposition bewegt wird, das heißt, sie wird gegen die elastische und komprimierbare Zwischenlage gedrückt, die hierbei unter Aufbau einer Rückstellkraft komprimiert wird. Nach Abschluss des Befüllvorgangs wird der Schieberabschnitt samt Einlegeteil in die unter entsprechendem Druck stehende Gießmasse eingebracht, so dass zwangsläufig ein entsprechender Druck auf das Einlegeteil wirkt, der zum Bewegen des Flansches in die Dichtanlage an der Vertiefungswand führt, wie vorstehend beschrieben. Mit Einnahme der Anlageposition des Einlegeteils am anderen Formteil respektive der anderen Metalllage wird die Aushärtung, also die eigentliche Polymerisationsreaktion, initiiert, zumeist durch einen Wärmeeintrag in die Gießmasse. Der Wärmeeintrag kann beispielsweise über das erste Formteil, also der ersten Metalllage erfolgen, die hierzu erwärmt wird. Es kommt zum Start der exothermen Polymerisationsreaktion, resultierend in einem mit fortschreitender Polymerisation zunehmendem Schwund. Reduziert sich nun aber reaktionsbedingt das Volumen der Gießmasse respektive des sich sukzessive auspolymerisierenden Formkörpers, so wird dieser Schwund automatisch dadurch kompensiert, dass die beweglich gelagerte Metalllage über die sich entspannende Zwischenlage nachgeführt wird, das heißt, dass die Zwischenlage sich wieder ausdehnt und die Metalllage nachdrückt. Der Gießhohlraum wird demzufolge sukzessive verkleinert, dem Schwund der auspolymerisierenden Gießmasse folgend. Es ist demzufolge eine automatische Nachführung oder Rückstellung über ein in ein Formteil integriertes Mittel, nämlich die elastische flächige Zwischenlage realisiert. Diese Bewegung kann problemlos über die Schiebereinrichtung nachvollzogen werden, so dass keinerlei Behinderung dieser Rückstellbewegung gegeben ist.

Im Fall der Variante mit einem bewegten Formteil wird dessen Bewegung relativ zum nicht bewegten Formteil über eine Steuerungseinrichtung, die das oder die Stellmittel, die das Formteil bewegen, entsprechend gesteuert. Das eine Formteil wird hierüber entsprechend angehoben oder abgesenkt, wobei natürlich auch beide Formteile bewegt werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipdarstellung einer erfindungsgemäßen Gießform im geschlossenen Zustand,
- Fig. 2: die Ansicht des unteren Formteils mit noch nicht aufgesetztem Einlegeteil,
- Fig. 3: die Anordnung aus Fig. 2 mit aufgesetztem Einlegeteil,
- Fig. 4: eine Schnittansicht durch das Einlegeteil aus Figuren 2 und 3,
- Fig. 5: eine Aufsicht auf das Einlegeteil aus Fig. 4,
- Fig. 6: eine vergrößerte Teilansicht des Bereichs **VI** in Fig. 2,
- Fig. 7: eine vergrößerte Teilansicht des Bereichs **VII** in Fig. 2,
- Fig. 8: eine vergrößerte Teilansicht eines Teils des unteren Formteils unter Darstellung eines Teils der Schiebereinrichtung, und
- Fig. 9: eine Prinzipdarstellung einer weiteren Ausführungsform einer erfindungsgemäßen Gießform.

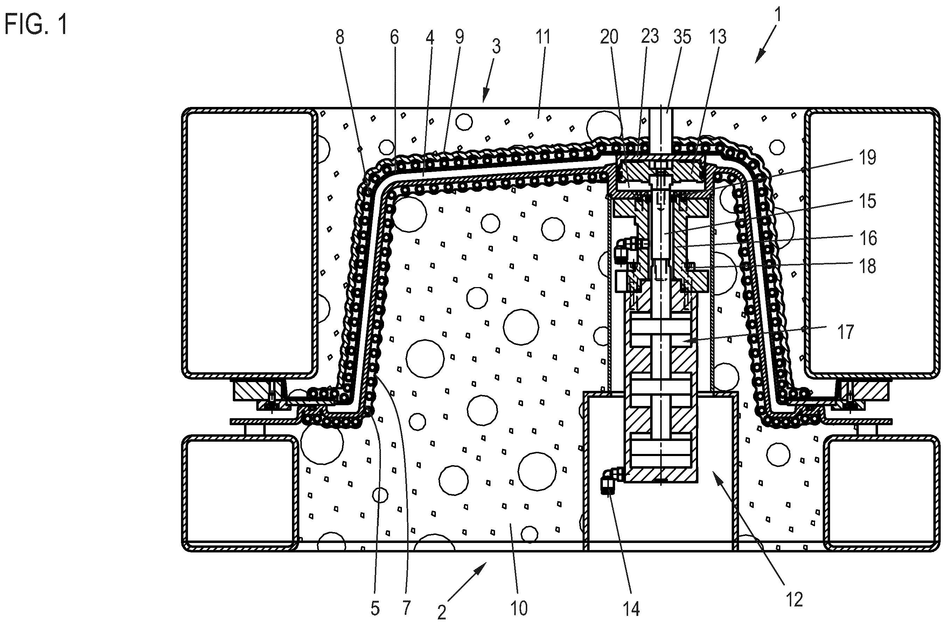

Fig. 1 zeigt eine Prinzipdarstellung einer erfindungsgemäßen Gießform 1, die zur Herstellung eines eine Vorder- und eine Rückseite aufweisenden Gießkörpers in Form einer aus einem Komposit-Werkstoff bestehenden Küchenspüle dient. Die Gießform 1 umfasst ein erstes Formteil 2, das der Ausformung respektive Definition der Vorderseite des herzustellenden Gießkörpers dient, sowie ein zweites Formteil 3, das der Ausformung respektive Definition der Rückseite des herzustellenden Gießkörpers dient. Beide Formteile 2, 3 liegen randseitig aneinander und begrenzen einen Gießhohlraum 4, in den eine Gießmasse bestehend aus einer aushärtbaren Polymermasse, also einer Reaktionsmasse, in die partikuläre Füllstoffe wie beispielsweise Quarzsand und Ähnliches eingebracht sind, unter Druck einbringbar ist. Hierzu ist am zweiten, oberen Formteil 3 eine Befüllöffnung 35 vorgesehen, über die die Gießmasse in den Gießhohlraum 4 eingebracht werden kann. Während das erste Formteil 2 positionsfest ist, kann das zweite Formteil 3 vertikal bewegt werden, also zum Schließen des Gießhohlraums 4 auf das untere erste Formteil 2 aufgesetzt werden.

Der Gießhohlraum 4 wird durch eine erste Metalllage 5, die am ersten Formteil 2 angeordnet ist, sowie eine zweite Metalllage 6, die am zweiten Formteil 3 angeordnet ist, begrenzt. Bei beiden Metalllagen handelt es sich vorzugsweise um Nickelbleche. Mit diesen beiden Metalllagen 5, 6 kommt die eingebrachte Gießmasse in Verbindung, liegt also flächig in diesen beiden Metalllagen 5, 6 an. Dabei ist an der Rückseite der Metalllage 5 eine erste Heizeinrichtung 7, die die Rückseite der ersten Metalllage 5 nahezu vollflächig belegt, angeordnet. Über diese Heizeinrichtung 7 kann die Temperatur der ersten Metalllage 5 und über diese die Erwärmung der Gießmasse von der Vorderseite her erfolgen. Auch das zweite Formteil weist eine zweite Heizeinrichtung 8 auf, die an der Rückseite der zweiten Metalllage, diese letztlich vollflächig belegend, angeordnet ist. Über die zweite Heizeinrichtung 8 kann die zweite Metalllage 6 und über sie die Gießmasse temperiert werden, mithin also der Wärmeeintrag von der Rückseite her in die Gießmasse gesteuert werden. Der zweiten Heizeinrichtung 8 folgt eine elastische und komprimierbare Zwischenlage 9, bevorzugt aus einem Moosgummi, welche elastische, komprimierbare Zwischenlage ein Rückstellmittel oder Rückstellelemente darstellt, über das eine gewisse Beweglichkeit der zweiten Metalllage 6 ermöglicht wird und gleichzeitig sichergestellt wird, dass die zweite Metalllage 6 in eine definierte Ausgangsposition wieder zurückgestellt werden kann.

Wird der Gießvorgang begonnen, so befindet sich die zweite Metalllage 6 in ihrer Ausgangsposition, der Gießhohlraum 4 weist ein definiertes Ausgangsvolumen auf. Die zweite Metalllage 6 ist in einem definierten Abstand zur ersten Metalllage 5, die Zwischenlage 9 ist entspannt oder nicht oder nur geringfügig komprimiert. Zu Beginn des Gießvorgangs wird die Gießmasse, bei der es sich z.B. um eine hinreichend fließfähige Masse auf Polyacrylat- oder Polymethacrylat-Basis handeln kann, in den Gießhohlraum mit einem Druck von ca. 2 - 5 bar eingebracht. Resultierend aus dem Gießdruck baut sich zu den beiden Metalllagen 5, 6 hin ein entsprechend hoher Flächendruck auf. Die erste Metalllage 5 ändert ihre Position nicht, sie ist unmittelbar an einem ersten Formteilträger 10 abgestützt. Demgegenüber weicht die zweite Metalllage 6 dem sich aufbauenden Druck aus, da sie über die Zwischenlage 9 an dem zweiten Formteilträger 11 abgestützt ist. Durch den hohen Einspritzdruck kann folglich das Gießhohlraumvolumen vergrößert werden. Sodann wird der Polymerisationsprozess initiiert, üblicherweise durch Ansteuern der ersten Heizeinrichtung 7. Sowohl bei der ersten Heizeinrichtung 7 als auch bei der zweiten Heizeinrichtung 8 handelt es sich um rohrförmige, beispielsweise mäanderförmig verlegte, schlauchförmige Heizelemente, durch die ein Temperierungsfluid geführt wird. Die Heizelemente sind in eine entsprechende Wärmeleitmasse eingebettet. Es kommt zum Erwärmen der Gießmasse im Gießhohlraum 4, die sich hierbei temperaturbedingt im Volumen etwas vergrößert, was zu einer weiteren Komprimierung der Zwischenlage 9 führt. Ist die lokale Erwärmung an der Grenzfläche zur ersten Metalllage 5 so groß, dass eine Polymerisationsstarttemperatur erreicht wird, so beginnt an dieser Schnittstelle die exotherme Polymerisationsreaktion, das heißt, dass die Polymermatrix auspolymerisiert, wobei die Polymerisationsfront sukzessive in die Gießmasse wandert, sich also Richtung der zweiten Metalllage bewegt. Dabei wird auch die zweite Metalllage über die zweite Heizeinrichtung 8 zu gegebener Zeit temperiert, um auch von dieser Seite die Polymerisationsreaktion zu steuern. Die Reaktion setzt sich, weil exotherm, selbständig von beiden Seiten im Volumen fort.

Mit der Polymerisation einher geht auch ein Schrumpfen der Gießmasse respektive des sich ergebenden Polymerisationskörpers, also eine Volumenverkleinerung. Damit sichergestellt ist, dass die Gießmasse respektive die auspolymerisierte Außenhaut des Gießkörpers stets in Kontakt zu beiden Metalllagen ist, wird nun automatisch die zweite Metalllage 6 über die komprimierte Zwischenlage 9 bewegt, die sich entspannt und zurückstellt, das heißt, dass die zweite Metalllage 6 dem Schwund, diesen kompensierend, nachgeführt wird. Die Integration der elastischen, komprimierbaren Zwischenlage 9 ermöglicht demzufolge eine automatische Nachstellung, um einen Schwundausgleich zu erreichen.

Wie beschrieben bestehen die beiden Formteile 2, 3 ferner aus entsprechenden Formteilträgern 10, 11, die jeweils aus einem Polymerbeton, bestehend aus einer Polymermatrix mit eingebetteten Füllstoffen wie beispielsweise Kies oder Sandpartikeln oder dergleichen bestehen. An diesen Formteilträgern 10, 11 sind die entsprechenden Heizeinrichtungen 7, 8 über die entsprechenden Wärmeleitmassen angebunden respektive im Falle des zweiten Formteils 3 über die elastische Zwischenlage 9.

Vorgesehen ist des Weiteren eine Schiebereinrichtung 12, die dazu dient, während des Formvorgangs eine Durchbrechung am fertig hergestellten Gießkörper auszubilden. Dieses Schiebereinrichtung umfasst einen in den Gießhohlraum 4 einfahrbaren Schieberabschnitt 13, der ausgehend von Fig. 1 vertikal verschoben werden kann, was mittels über einen geeigneten Anschuss 14 zugeführter Pressluft erfolgt. Der Schieberabschnitt 13 ist an einer entsprechenden Kolbenstange 15 angeordnet, die axial verschoben werden kann. Die Kolbenstange 15 ihrerseits ist in einer geeigneten Stangenaufnahme 16 angeordnet, an die sich wiederum der eigentliche Zylinder 17 anschließt, in den die Pressluft eingebracht wird, und in dem auch der oder die entsprechenden, mit der Kolbenstange verbundenen Kolben vorgesehen sind. Der Zylinder 17 seinerseits ist über geeignete Schraubverbindungen 18 mit der Stangenaufnahme 16 verschraubt, die ihrerseits wieder über geeignete Schraubverbindungen 19 mit der Metalllage 5, die in diesem Bereich verstärkt ist, verschraubt ist.

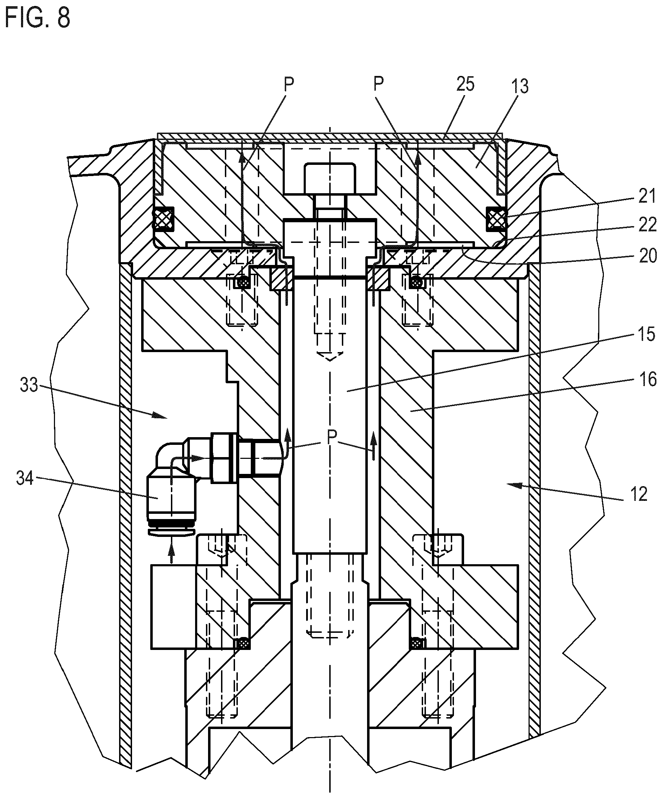

Die Metalllage 5 selbst weist eine zylindrische Vertiefung 20 auf, in der der zylindrische Schieberabschnitt 13 aufgenommen ist. Am Schieberabschnitt 13 ist, siehe hierzu auch die vergrößerte Ansicht gemäß Fig. 8, ein umlaufendes Dichtelement 21 angeordnet, das zur Wand 22 der Vertiefung 20 hin abdichtet.

An respektive auf dem Schieberabschnitt 13 ist in der in Fig. 1 gezeigten Arbeitssituation ein zylindrisches Einlegeteil 23, vorzugsweise aus Polypropylen, aufgesetzt, das das Schieberteil 13 oberseitig vollständig abdeckt. **In** der in Fig. 1 gezeigten Arbeitsposition der Schiebereinrichtung 12 respektive des Schieberabschnitts 13 ist dieser aus einer Nichtarbeitsposition, die nachfolgend noch beschrieben wird, ausgefahren und in den mit der Gießmasse befüllten Gießhohlraum 4 eingefahren, wobei sich das Einlegeteil 23 mit seiner ebenen, freien Oberseite an die gegenüberliegende Metalllage 6 anlegt, so dass durch das Einlegeteil 23, das auch in der Arbeitsposition nach wie vor mit seinem unteren Rand in der Vertiefung 20 aufgenommen ist, eine hier zylindrische Durchbrechung in der Gießmasse, die noch nicht auspolymerisiert ist, hergestellt wird. Setzt nun nachfolgend die Polymerisationsreaktion ein, so wird das Einlegeteil 23 in den auspolymerisierten Gießkörper fest eingebettet. Durch das Nachdrücken der Metalllage 6 durch die elastische Zwischenlage 9 für den Schwundausgleich ist sichergestellt, dass die Geißmasse das Einlegeteil permanent seitlich einbettet. Die Schiebereinrichtung 12 respektive der Schieberabschnitt 13 kann einen etwaigen Schwundausgleich während des Polymerisationsvorgangs mit vollziehen, das heißt, dass die Bewegung der Metalllage 6, an der das Einlegeteil 23 anliegt, vom Schieberabschnitt 13 mit vollzogen wird und er leicht zurückgeschoben wird.

Nach erfolgter Auspolymerisation wird der Schieberabschnitt 13, nachdem das obere Formteil 3 abgehoben wurde, vertikal nach unten bewegt. Hierbei wird das fest im Gießkörper eingebettete Einlegeteil 23 vom Schieberabschnitt 13 getrennt, das Einlegeteil 23 verbleibt im Gießkörper, der sodann entformt wird.

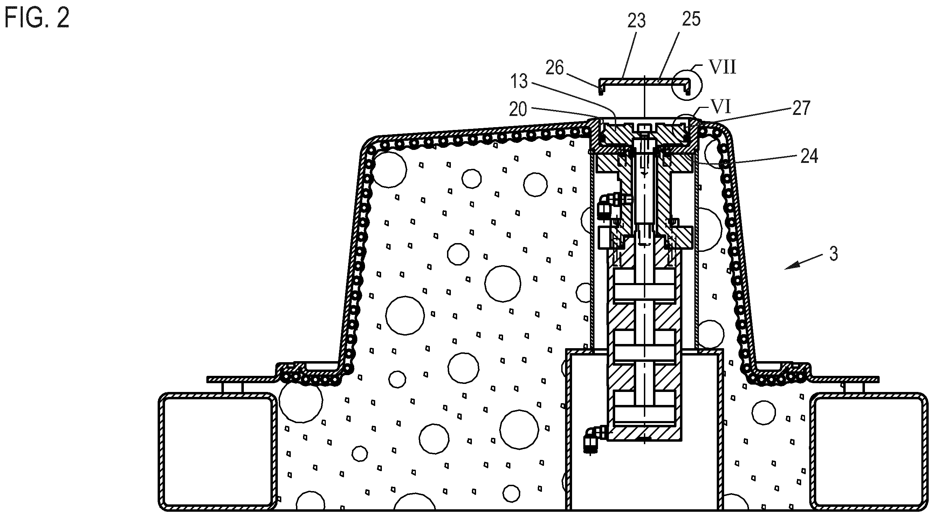

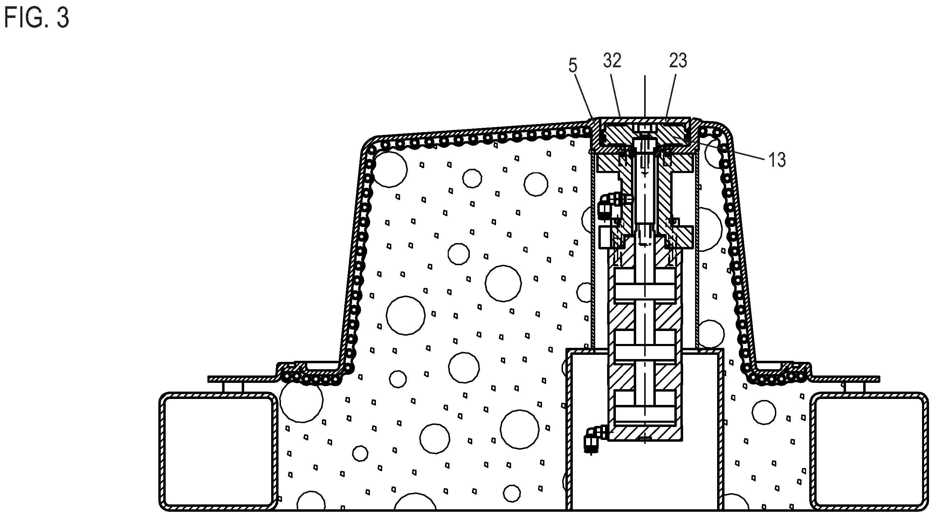

Fig. 2 zeigt in Form einer Explosionsansicht das untere Formteil 3 mit dem in der Nichtarbeitsposition befindlichen Schieberabschnitt 13. Dieser befindet sich wie Fig. 1 anschaulich zeigt im Inneren der Vertiefung 20, ist also vollständig eingefahren, er liegt unterseitig am Boden 24 der Vertiefung 20 auf. Das Einlegeteil 23 ist noch nicht aufgesetzt, es befindet sich entfernt vom Schieberabschnitt 13 und wird auf diesen manuell aufgesetzt. Diese Situation ist in Fig. 3 gezeigt.

In Fig. 3 sitzt das Einlegeteil 23 fest auf dem Schieberabschnitt 13 auf. In dieser Situation kann sodann das zweite, obere Formteil 3 abgesenkt und aufgesetzt werden, wonach der eigentliche Gießprozess wie vorstehend beschrieben beginnen kann.

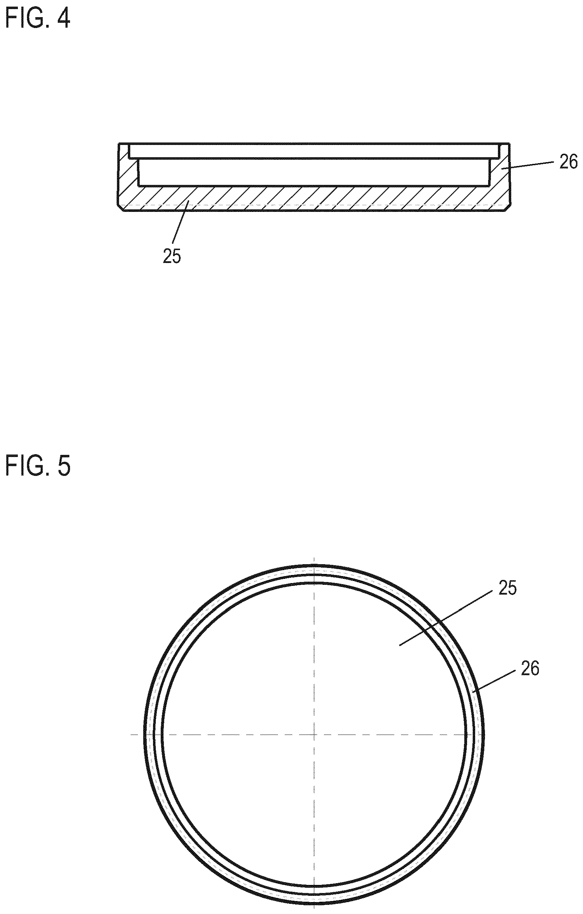

Das Einlegeteil 23 ist quasi deckelartig ausgeführt und weist eine ringscheibenförmige Bodenplatte 25 auf, siehe hierzu auch die Figuren 4 und 5, an die sich ein umlaufender Ringflansch 26 anschließt. Mit diesem Ringflansch 26 greift das Einlegeteil 23 in einen entsprechenden Aufnahmefalz, der hier als Ringfalz 27 ausgeführt ist, am Schieberabschnitt 13 ein, wie insbesondere ein Vergleich der Figuren 2 und 3 zeigt. Zum Einsetzen wird das Einlegeteil 23 von oben auf den Schieberabschnitt 13 gesetzt, so dass der Ringflansch 26 in den Ringfalz 27 eingreift, während die Bodenplatte 25 oberseitig auf dem Schieberabschnitt 13 aufsitzt.

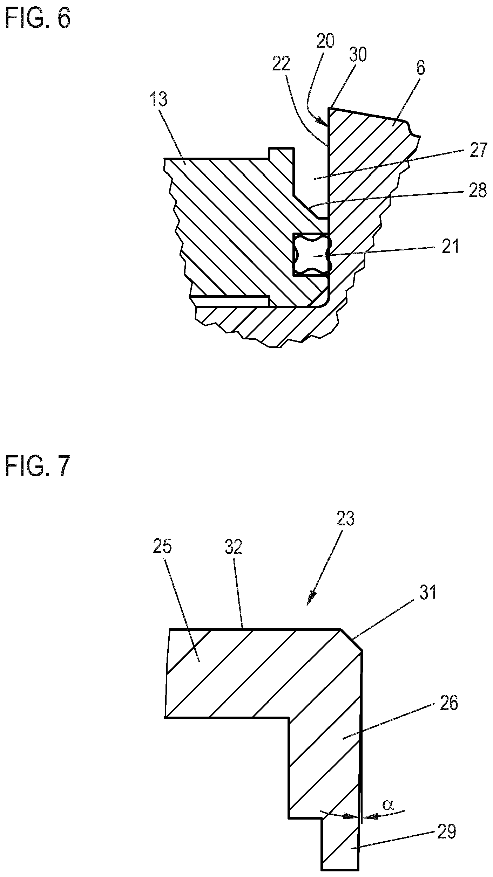

Details des Einlegeteils 23 sowie des Schieberabschnitts 13 und der Metalllage 6 im Bereich der Vertiefung 20 sind den Figuren 6 und 7 zu entnehmen.

Fig. 6 zeigt eine vergrößerte Teilansicht des Bereichs VI aus Fig. 2. Gezeigt ist einerseits abschnittsweise die Metalllage 6 im Bereich der Vertiefung 20, andererseits abschnittsweise der Schieberabschnitt 13 im Bereich des Ringfalzes 27. Der Ringfalz 27 weist eine Fase 28 auf, also einen konischen Abschnitt, der sich, vertikal von oben gesehen, nach unten hin erweitert. Gegen diese Fase 28 läuft der Ringflansch 26 mit seinem unteren freien Ende 29, wobei dieses untere freie Ende 29, siehe Fig. 7, in der Materialstärke reduziert ist, mithin also etwas weicher und verformbarer ist. Hierüber wird sichergestellt, dass das Einlegeteil 23 bzw. der Ringflansch 26 radial in eine feste Dichtanlage gegen die Wand 22 der Vertiefung 20 gedrückt wird. Denn beim Ausfahren des mit dem Einlegeteil 23 versehenen Schieberabschnitts 13 drückt das Einlegeteil 23 bereits während der Ausfahrbewegung gegen die eingebrachte Gießmasse und versucht diese zu verdrängen. Über diesen Druck wird das Einlegeteil 23, das bis dahin gegebenenfalls mit geringem Abstand mit seiner Bodenplatte 25 zum Aufnahmebereich des Schieberabschnitts 13 positioniert war, gänzlich in Anlage gedrückt. Dieser Vorgang kann auch erst mit dem unmittelbaren Anlaufen an der gegenüberliegenden Metalllage 6 vonstattengehen. In jedem Fall gleitet das Ende 29 auf der Fase 28 ab und wird hierbei geringfügig zur Seite verformt respektive aufgeweitet, so dass sich eine feste Dichtanlage gegen die Wand 22 der Vertiefung 20 gedrückt wird. Mit dieser Verformung einher geht auch eine gewisse Gesamtverformung des Ringflanschs 26, so dass eine flächige Dichtanlage zur Metalllage 6 gegeben ist, die während der gesamten Ausfahrbewegung respektive Anlagebewegung gegen die Metalllage 6 aufrechterhalten bleibt. Hierüber wird sichergestellt, dass keinerlei Gießmasse in den Bereich der Vertiefung 20 dringen kann. Dem Abdichten zuträglich ist ferner eine Dichtkante 30, die an der Metalllage 6 ausgebildet ist und als scharfe Kante die Vertiefung 20 endseitig berandet. Diese Dichtkante, die auch geringfügig in die Vertiefung 20 hervorragen kann, stellt eine zusätzliche Abdichtebene zum Ringflansch 26 dar.

Wie Fig. 7 ferner zeigt, weist das Einlegeteil 23 an seiner dem zweiten Formteil 3 zugewandten Außenkante eine Fase 31 auf, die unmittelbar an die ebene Bodenfläche 32, mit der das Einlegeteil 23 an der ebenfalls ebenen Metalllage 6 in der Arbeitsposition anliegt, anschließt. Diese Fase 31 definiert einen Ringraum, der zwangsläufig mit Gießmasse gefüllt wird. Im auspolymerisierten Zustand bildet sich ein schmaler, das Einlegeteil 23 quasi übergreifender Ringrand des Gießkörpers aus, der als Widerlager dient und sicherstellt, dass das Einlegeteil 23 bei der späteren Pressluftentformung nicht unkontrolliert herausgedrückt wird. Der Winkel der Fase 31 beträgt beispielsweise ca. 45°.

Ferner ist in Fig. 7 ein Winkel α dargestellt. Der Winkel α definiert eine gewisse Konizität des Ringflanschs 26, er ermöglicht ein erleichtertes Einsetzen und eine verbesserte Dichtfunktion im Bereich der Dichtkante 30. Der Winkel α beträgt beispielsweise ca. 1 °.

Fig. 3 zeigt wie beschrieben die Nichtarbeitsposition, wenn das Einlegeteil 23 auf den Schieberabschnitt 13 aufgesetzt ist, sich dieser aber noch vollständig in der Vertiefung 20 befindet. Ersichtlich schießt die Bodenfläche 32 des Einlegeteils 23 bündig mit der Dichtkante 30 der Metalllage 6 ab, so dass sich in diesem Bereich eine ebene Geometrie ergibt, worüber sichergestellt wird, dass der Schieberabschnitt 13 und das Einlegeteil 23 kein Strömungshindernis für die unter Druck einströmende Gießmasse darstellt und eine homogene Füllung des Gießhohlraums 4 erreicht wird.

Wie beschrieben, wird zum Verschieben des Schieberabschnitts 13 samt Einlegeteil 23 Druckluft genutzt, die über den Druckluftanschluss 14 in den Zylinder 17 geführt wird, so dass die dortige Kolbenanordnung, die die Kolbenstange 15 trägt, axial nach oben geschoben wird und der Schieberabschnitt 13 in der Vertiefung 20 linear verschoben und in Richtung des zweiten Formteils 3 bewegt wird, bis das Einlegeteil 23 in eine feste flächige Anlage an der zweiten Metalllage 6 gelangt ist. Nach erfolgter Durchpolymerisation und gegebenenfalls nach Öffnen der Gießform 1 durch Anheben des zweiten Formteils 3 wird der Schieberabschnitt 13 wieder, ebenfalls pressluftgesteuert, zurückgezogen, das heißt, dass die Luftverteilung im Zylinder 17 umgesteuert wird. Da zu diesem Zeitpunkt jedoch das Einlegeteil 23 fest in die ausgehärtete Gießmasse, also den Gießkörper, eingebettet ist, verbleibt sie in diesem, sie löst sich also von dem sich abwärts bewegenden Schieberabschnitt 13. Der nachfolgend ausgeformte Formkörper weist also einerseits die gewünschte Form auf, andererseits aber auch das Einlegeteil 23, das eine definierte zylindrische Durchbrechung, hier einen Spülenabfluss, definiert. Das Einlegeteil 23 wird sodann auf einfache Weise mechanisch, beispielsweise mittels eines Gummihammers, herausgeklopft, nachdem der Gießkörper vollständig entformt, also auch vom ersten Formteil 2 genommen wurde.

Diese Entformung kann mit der Schiebereinrichtung 12 unterstützt werden, indem die Schiebereinrichtung als zusätzliche Auswerfereinrichtung genutzt wird. Hierzu weist, siehe Fig. 8, die Schiebereinrichtung 12 eine Druckluftverteileinrichtung 33 auf, umfassend einen weiteren Druckluftanschluss 34 auf, der an der Stangenaufnahme 16 angeordnet ist, in der wiederum die Kolbenstange 15 mit Abstand angeordnet ist. Die Anordnung ist derart, dass die zugeführte Pressluft seitlich der Kolbenstange 15 strömt und letztlich einen Luftdruck aufbaut, der, siehe die Strömungspfeile **P,** an der Unterseite der Bodenplatte 25 anliegt. Das heißt, dass über die Pressluft letztlich von unten gegen das fest in dem polymerisierten Gießkörper eingebettete Einlegeteil 23 gedrückt wird, wobei das Einlegeteil 23, wie beschrieben, über den die Fase 31 ausfüllenden, polymerisierten Ringrand des Gießkörpers gegen eine Bewegung in diese Druckrichtung fixiert ist. Dieser Ringrand bildet folglich ein Widerlager, das verhindert, dass das Einlegeteil 23 durch den an der Unterseite anliegenden Pressluftdruck quasi herausgeschossen wird. Durch diesen Luftdruck von unten kann das Abheben des fertigen Formkörpers vom ersten Formteil 2 unterstützt werden.

Nach dieser finalen Entformung wird wie beschrieben das Einlegeteil 23 mechanisch vom Gießkörper getrennt und herausgedrückt oder herausgeschlagen. Bevorzugt besteht das Einlegeteil 23 aus einem Kunststoff, vorzugsweise einem Polypropylen, wobei die Erfindung hierauf nicht beschränkt ist. Gewählt werden sollte ein Kunststoff, der eine möglichst geringe Haftung zum Polymermaterial, aus dem der Gießkörper gebildet ist, aufweist, so dass folglich das Einlegeteil 23 keine oder nur eine sehr schwache stoffschlüssige Verbindung zum Gießkörper eingeht und das Herausdrücken oder Herausklopfen des Einlegeteils 23 einfach vonstatten gehen kann.

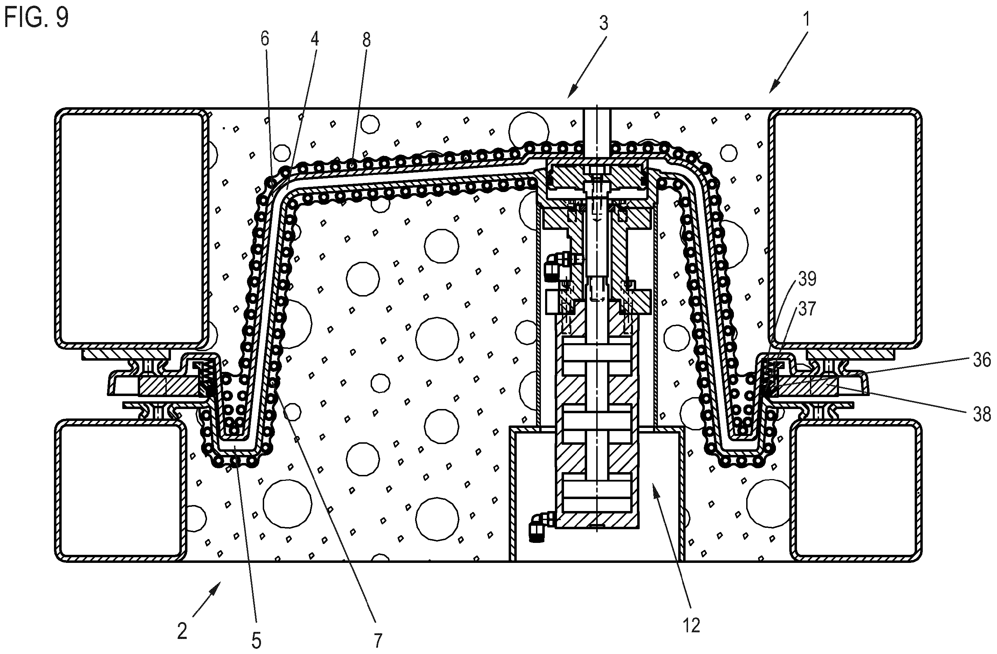

Fig. 9 zeigt eine weitere Variante einer erfindungsgemäßen Gießform 1, wobei für gleiche Bauteile gleiche Bezugszeichen verwendet werden.

Die Gießform 1 weist ebenfalls zwei Formteile 2, 3 auf, die einen Gießhohlraum 4 über zwei Metalllagen 5, 6, die über in eine Wärmeleitmasse eingebettete Heizeinrichtung 7, 8 beheizbar sind, begrenzen. Auch ist eine erfindungsgemäße Schiebereinrichtung 12 vorgesehen.

Im Unterschied zur vorher beschriebenen Formausführung mit integriertem Schwundausgleich sind hier die beiden Formteile 2, 3 relativ zueinander beweglich, um einen Schwund auszugleichen. Vorgesehen ist eine umlaufende, bewegliche Halterung 36 für ein Dichtelement 37 wie einen Dichtgummi, welches Dichtelement 37 an beiden Formteilen 2, 3 bzw. den beiden Metalllagen 5, 6 dicht anliegt. Die Halterung 36 selbst ist an einer Halterungsaufnahme 38 angeordnet. Die bewegliche Halterung 36 ist über Federelemente 39 verspannt, so dass stets eine Dichtanlage des Dichtelements 37 an beiden Metalllagen 5, 6 gegeben ist, auch wenn sich diese bzw. die beiden Formteile 2, 3 zum Schwundausgleich relativ zueinander bewegen. Bei dieser Formausgestaltung bildet sich aufgrund des randseitigen Umgriffs der Metalllage 5 um die Metalllage 6 ein sehr dünner Gießrand, der nachträglich abzutrennen ist.

In den Ausführungsbeispielen ist jeweils eine Schiebereinrichtung in zylindrischer Bauform gezeigt. Denkbar ist es alternativ, dass die Vertiefung und der Schieberabschnitt eine von einer Kreisform abweichende Querschnittsform aufweisen, wobei das Einlegeteil eine dieser Querschnittsform entsprechend geformte Bodenplatte und einen Flansch aufweist, der in einen Aufnahmefalz des Schieberabschnitts eingreift. Es ist also auch möglich, von einer Kreisform abweichenden Durchbrechungen mittels der erfindungsgemäß vorgesehenen Schiebereinrichtung zu erzeugen.

Ebenso ist die Erfindung nicht auf die gezeigten Bauformen der Gießform sowie der Formteile beschränkt. Vielmehr erfasst die Erfindung jedwede Gießform-Bauform mit zwei beliebig ausgeführten Formteilen, die den Gießhohlraum begrenzen und die der Herstellung eines Gießkörpers durch beliebige Härtemethoden, also warm- als auch kalthärtend, dienen.

## Patentansprüche

1. Gießform zur Herstellung eines eine Vorder- und eine Rückseite aufweisenden Gießkörpers, wie Waschbecken, Duschtasse, Küchenspüle und Ähnliches, aus einer aushärtbaren Gießmasse, mit zumindest einem die Vorderseite formenden ersten Formteil (2) und einem die Rückseite formenden zweiten Formteil (3), die zusammen einen Gießhohlraum (4) begrenzen, **gekennzeichnet durch** eine an einem der Formteile (2) vorgesehene Schiebereinrichtung (12) umfassend einen in den Gießhohlraum (4) einfahrbaren Schieberabschnitt (13), an dem ein lösbares, am ausgehärteten Gießkörper eine sich von der Vorderseite zur Rückseite erstreckende Durchbrechung definierendes Einlegeteil (23) angeordnet ist, das über den Schieberabschnitt (13) in den mit der Gießmasse gefüllten Gießhohlraum unter Verdrängung der Gießmasse gegen das gegenüberliegende Formteil (3) in Anlage daran bewegbar und in die aushärtende Gießmasse einbettbar ist, und das sich beim Zurückbewegen des Schieberabschnitts (13) nach dem Aushärten der Gießmasse von diesem löst.

2. Gießform nach Anspruch 1, **dadurch gekennzeichnet, dass** das die Schiebereinrichtung (12) aufweisende Formteil (2) an der den Gießhohlraum (4) begrenzenden Seite eine Vertiefung (20) aufweist, in der der Schieberabschnitt (13) aufgenommen ist und aus der der Schieberabschnitt (13) zumindest abschnittsweise heraus bewegbar ist.

3. Gießform nach Anspruch 2, **dadurch gekennzeichnet, dass** der Schieberabschnitt (13) ein umlaufendes und zur Wand (22) der Vertiefung (20) hin abdichtendes Dichtelement (21) aufweist.

4. Gießform nach Anspruch 2 oder 3, **dadurch gekennzeichnet, dass** das Einlegeteil (23) eine Bodenplatte (25) und einen randseitig daran anschließenden, umlaufenden Flansch (26) aufweist, wobei in der Montagestellung die Bodenplatte (25) auf einem Tragabschnitt des Schieberabschnitts (13) aufsitzt und der Flansch (26) ein einen umlaufenden Aufnahmefalz des Schieberabschnitts (13) eingreift und zumindest abschnittsweise in der Vertiefung (20) aufgenommen ist.

5. Gießform nach einem der Ansprüche 2 bis 4, **dadurch gekennzeichnet, dass** die Vertiefung (20) und der Schieberabschnitt (13) zylindrisch sind, und dass das Einlegeteil (23) eine runde Bodenplatte (25) und einen Ringflansch (26) aufweist, der in einen Ringfalz (27) des Schieberabschnitts (13) eingreift, oder dass die Vertiefung (20) und der Schieberabschnitt (13) eine von einer Kreisform abweichende Querschnittsform aufweisen, wobei das Einlegeteil (23) eine dieser Querschnittsform entsprechend geformte Bodenplatte (25) und einen Flansch aufweist, der in einen Aufnahmefalz des Schieberabschnitts eingreift.

6. Gießform nach Anspruch 4 oder 5, **dadurch gekennzeichnet, dass** die Bodenplatte (25) bündig mit einer die Vertiefung (20) begrenzenden Randfläche der den Gießhohlraum (4) begrenzenden Seite des Formteils (2) angeordnet ist.

7. Gießform nach einem der Ansprüche 4 bis 6, **dadurch gekennzeichnet, dass** der Flansch, insbesondere der Ringflansch (26), zumindest in der an dem anderen Formteil (3) anliegenden Position des Einlegeteils (23) in Dichtanlage an der Wand (22) der Vertiefung (20) anliegt.

8. Gießform nach Anspruch 7, **dadurch gekennzeichnet, dass** der Aufnahmefalz eine Fase (28) aufweist, an der der Flansch mit seinem freien Ende anliegt, wobei der Flansch beim Bewegen des Schieberabschnitts (13) in Richtung des anderen Formteils (3) oder bei Anlaufen gegen das andere Formteil (3) an der Fase (28) des Falzes abgleitet und sich umlaufend gegen die Wand (22) aufweitet.

9. Gießform nach Anspruch 8, **dadurch gekennzeichnet, dass** die Wandstärke des Flansches an seinem freien Ende reduziert ist.

10. Gießform nach einem der Ansprüche 2 bis 9, **dadurch gekennzeichnet, dass** die Vertiefung (20) am zum Gießhohlraum (4) weisenden Ende eine umlaufende Dichtkante (30) aufweist, die am eingesetzten Einlegeteil (23) abdichtend anliegt.

11. Gießform nach einem der vorangehenden Ansprüche, **dadurch gekennzeichnet, dass** das Einlegeteil (23) an seiner in der am anderen Formteil (3) anliegenden Position weisenden Außenkante eine Fase (31) aufweist.

12. Gießform nach einem der vorangehenden Ansprüche, **dadurch gekennzeichnet, dass** die Schiebereinrichtung (12) auch als Auswerfereinrichtung zum Abheben des ausgehärteten Gießkörpers vom Formteil (2) dient.

13. Gießform nach Anspruch 12, **dadurch gekennzeichnet, dass** an der Schiebereinrichtung (12) eine Druckluftverteileinrichtung (33) vorgesehen ist, über die Druckluft an die auf dem Schieberabschnitt (13) aufsitzende Unterseite des Einlegeteils (23) führbar ist.

14. Gießform nach einem der vorangehenden Ansprüche, **dadurch gekennzeichnet, dass** das Einlegeteil (23) aus einem Kunststoff, insbesondere aus Polypropylen ist.

15. Gießform nach einem der vorangehenden Ansprüche, **dadurch gekennzeichnet, dass** das erste Formteil (2) eine den Gießhohlraum (4) begrenzende erste Metalllage (5) und das zweite Formteil (3) eine den Gießhohlraum (4) begrenzende zweite Metalllage (6) aufweist.

16. Gießform nach Anspruch 15, **dadurch gekennzeichnet, dass** die Vertiefung (20) an einer der beiden Metalllagen (6) ausgebildet ist.

17. Gießform nach Anspruch 15 oder 16, **dadurch gekennzeichnet, dass** zumindest eine oder die Metalllage (6) des Formteils (3), gegen das das Einlegeteil (23) bewegt wird, zur Veränderung des Gießhohlraumvolumens (4) zumindest abschnittsweise verformbar ist.

18. Gießform nach Anspruch 17, **dadurch gekennzeichnet, dass** das Formteil (3) eine flächige Zwischenlage (9) aus einem elastisch verformbaren und komprimierbaren Material aufweist, gegen die die Metalllage (6) des Formteils (3) unter Aufbau einer Rückstellkraft seitens der sich verformenden Zwischenlage (9) bewegbar ist.

19. Gießform nach einem der Ansprüche 1 bis 14, **dadurch gekennzeichnet, dass** wenigstens ein Formteil (2, 3) relativ zum anderen Formteil (2, 3) zur Veränderung des Gießhohlraumvolumens (4) bewegbar ist.

## Claims

1. Casting mould for the production of a casting having a front and a rear side, such as a sink, shower tray, kitchen sink and the like, from a curable casting compound, having at least one first mould part (2) that forms the front side, and a second mould part (3) that forms the rear side, which mould parts conjointly delimit a casting cavity (4), **characterized by** a slide device (12) that is provided on one of the mould parts (2) and comprises a slide portion (13) which is retractable into the casting cavity (4) and on which is arranged a releasable insert part (23) which defines on the cured casting a cut-out extending from the front side to the rear side and which by way of the slide portion (13) resting thereon is movable into the casting cavity filled with the casting compound while displacing the casting compound towards the opposite mould part (3) and is able to be embedded in the curing casting compound, and which is released from the slide portion (13) when the latter is moved back after the casting compound has cured.

2. Casting mould according to Claim 1, **characterized in that** the mould part (2) which has the slide device (12) has on the side delimiting the casting cavity (4) a depression (20) in which the slide portion (13) is received, and from which the slide portion (13) is at least in portions able to be moved out.

3. Casting mould according to Claim 2, **characterized in that** the slide portion (13) has an encircling sealing element (21) which seals in relation to the wall (22) of the depression (20).

4. Casting mould according to Claim 2 or 3, **characterized in that** the insert part (23) has a base plate (25) and an encircling flange (26) peripherally adjacent thereto, wherein in the assembly position, the base plate (25) sits on a support portion of the slide portion (13) and the flange (26) engages in an encircling receptacle beading of the slide portion (13) and is at least in portions received in the depression (20).

5. Casting mould according to one of Claims 2 to 4, **characterized in that** the depression (20) and the slide portion (13) are cylindrical, and **in that** the insert part (23) has a round base plate (25) and an annular flange (26) which engages in an annular beading (27) of the slide portion (13), or **in that** the depression (20) and the slide portion (13) have a cross-sectional shape deviating from a circular shape, wherein the insert part (23) has a base plate (25) formed in accordance with this cross-sectional shape and a flange that engages in a receptacle beading of the slide portion.

6. Casting mould according to Claim 4 or 5, **characterized in that** the base plate (25) is arranged flush with a peripheral surface, delimiting the depression (20), of the side of the mould part (2) that delimits the casting cavity (4).

7. Casting mould according to one of Claims 4 to 6, **characterized in that** the flange, in particular the annular flange (26), at least in the position of the insert part (23) in which the latter rests on the other mould part (3), rests in a sealing manner on the wall (22) of the depression (20).

8. Casting mould according to Claim 7, **characterized in that** the receptacle beading has a bevel (28) on which the flange rests by way of its free end, wherein the flange, when moving the slide portion (13) in the direction of the other mould part (3) or when contacting the other mould part (3), slides off the bevel (28) of the beading and expands in an encircling manner against the wall (22).

9. Casting mould according to Claim 8, **characterized in that** the wall thickness of the flange is reduced at its free end.

10. Casting mould according to one of Claims 2 to 9, **characterized in that** the depression (20) has at the end facing the casting cavity (4) an encircling sealing edge (30) which rests in a sealing manner on the inserted insert part (23).

11. Casting mould according to one of the preceding claims, **characterized in that** the insert part (23), in its position resting on the other mould part (3), has on its external edge pointing towards the latter a bevel (31).

12. Casting mould according to one of the preceding claims, **characterized in that** the slide device (12) also serves as an ejector device for lifting the cured casting from the mould part (2).

13. Casting mould according to Claim 12, **characterized in that** provided on the slide device (12) is a compressed air distribution device (33) by way of which compressed air is able to be guided to the underside of the insert part (23) that sits on the slide portion (13).

14. Casting mould according to one of the preceding claims, **characterized in that** the insert part (23) is made of a plastics material, in particular of polypropylene.

15. Casting mould according to one of the preceding claims, **characterized in that** the first mould part (2) has a first metal layer (5) delimiting the casting cavity (4), and the second mould part (3) has a second metal layer (6) delimiting the casting cavity (4).

16. Casting mould according to Claim 15, **characterized in that** the depression (20) is formed on one of the two metal layers (6).

17. Casting mould according to Claim 15 or 16, **characterized in that** at least one or the metal layer (6) of the mould part (3), against which the insert part (23) is moved, is deformable at least in portions for varying the casting cavity volume (4).

18. Casting mould according to Claim 17, **characterized in that** the mould part (3) has a planar intermediate layer (9) made of an elastically deformable and compressible material, against which the metal layer (6) of the mould part (3) is able to be moved while building up a restoring force on the deforming intermediate layer (9).

19. Casting mould according to one of Claims 1 to 14, **characterized in that** at least one mould part (2, 3) is able to be moved relative to the other mould part (2, 3) for varying the casting cavity volume (4).

## Revendications

1. Moule de coulée destiné à la fabrication d'un corps moulé présentant une face avant et une face arrière, tel qu'un lavabo, un receveur de douche, un évier de cuisine et analogue, à partir d'une masse de coulée durcissable, comprenant au moins une première partie de moule (2) formant la face avant et une deuxième partie de moule (3) formant la face arrière, qui délimitent ensemble une cavité de coulée (4), **caractérisé par** un dispositif à coulisseau (12) prévu sur l'une des parties de moule (2) et comprenant une section de coulisseau (13) pouvant être introduite dans la cavité de coulée (4), sur laquelle est disposée une pièce d'insertion (23) amovible définissant, sur le corps moulé durci, une ouverture traversante s'étendant de la face avant à la face arrière, laquelle pièce d'insertion peut, par l'intermédiaire de la section de coulisseau (13), être déplacée dans la cavité de coulée remplie de la masse de coulée, en déplaçant la masse de coulée, jusqu'à venir en appui contre la partie de moule opposée (3), et être incorporée dans la masse de coulée en cours de durcissement, et se détache de la section de coulisseau (13) lors du déplacement de retour de celle-ci après le durcissement de la masse de coulée.

2. Moule de coulée selon la revendication 1, **caractérisé en ce que** la partie de moule (2) présentant le dispositif à coulisseau (12) présente, sur le côté délimitant la cavité de coulée (4), un évidement (20) dans lequel la section de coulisseau (13) est reçue et hors duquel la section de coulisseau (13) peut être déplacée au moins partiellement.

3. Moule de coulée selon la revendication 2, **caractérisé en ce que** la section de coulisseau (13) présente un élément d'étanchéité périphérique (21) assurant une étanchéité vis-à-vis de la paroi (22) de l'évidement (20).

4. Moule de coulée selon la revendication 2 ou 3, **caractérisé en ce que** la pièce d'insertion (23) présente une plaque de fond (25) et une bride périphérique (26) qui s'y raccorde au niveau du bord, dans lequel, dans la position de montage, la plaque de fond (25) repose sur une section de support de la section de coulisseau (13) et la bride (26) s'engage dans une feuillure de réception périphérique de la section de coulisseau (13) et est reçue au moins partiellement dans l'évidement (20).

5. Moule de coulée selon l'une des revendications 2 à 4, **caractérisé en ce que** l'évidement (20) et la section de coulisseau (13) sont cylindriques, et **en ce que** la pièce d'insertion (23) présente une plaque de fond ronde (25) et une bride annulaire (26) qui s'engage dans une feuillure annulaire (27) de la section de coulisseau (13), ou **en ce que** l'évidement (20) et la section de coulisseau (13) présentent une forme de section transversale différente d'une forme circulaire, la pièce d'insertion (23) présentant une plaque de fond (25) conformée conformément à cette forme de section transversale et une bride qui s'engage dans une feuillure de réception de la section de coulisseau.

6. Moule de coulée selon la revendication 4 ou 5, **caractérisé en ce que** la plaque de fond (25) est disposée à fleur d'une surface de bord délimitant l'évidement (20) du côté de la partie de moule (2) délimitant la cavité de coulée (4).

7. Moule de coulée selon l'une des revendications 4 à 6, **caractérisé en ce que** la bride, en particulier la bride annulaire (26), est en appui étanche contre la paroi (22) de l'évidement (20), au moins dans la position dans laquelle la pièce d'insertion (23) est en appui contre l'autre partie de moule (3).

8. Moule de coulée selon la revendication 7, **caractérisé en ce que** la feuillure de réception présente un chanfrein (28) contre lequel la bride est en appui par son extrémité libre, la bride glissant sur le chanfrein (28) de la feuillure lors du déplacement de la section de coulisseau (13) en direction de l'autre partie de moule (3) ou lorsqu'elle vient en butée contre l'autre partie de moule (3), et s'évasant périphériquement contre la paroi (22).

9. Moule de coulée selon la revendication 8, **caractérisé en ce que** l'épaisseur de paroi de la bride est réduite au niveau de son extrémité libre.

10. Moule de coulée selon l'une des revendications 2 à 9, **caractérisé en ce que** l'évidement (20) présente, à son extrémité orientée vers la cavité de coulée (4), une arête d'étanchéité périphérique (30) qui est en appui étanche contre la pièce d'insertion (23) mise en place.

11. Moule de coulée selon l'une des revendications précédentes, **caractérisé en ce que** la pièce d'insertion (23) présente, sur son arête extérieure orientée dans la position en appui contre l'autre partie de moule (3), un chanfrein (31).

12. Moule de coulée selon l'une des revendications précédentes, **caractérisé en ce que** le dispositif à coulisseau (12) sert également de dispositif d'éjection destiné à soulever le corps moulé durci de la partie de moule (2).

13. Moule de coulée selon la revendication 12, **caractérisé en ce qu'**un dispositif de distribution d'air comprimé (33) est prévu sur le dispositif à coulisseau (12), par l'intermédiaire duquel de l'air comprimé peut être amené à la face inférieure de la pièce d'insertion (23) reposant sur la section de coulisseau (13).

14. Moule de coulée selon l'une des revendications précédentes, **caractérisé en ce que** la pièce d'insertion (23) est constituée d'une matière plastique, en particulier de polypropylène.

15. Moule de coulée selon l'une des revendications précédentes, **caractérisé en ce que** la première partie de moule (2) présente une première couche métallique (5) délimitant la cavité de coulée (4) et la deuxième partie de moule (3) présente une deuxième couche métallique (6) délimitant la cavité de coulée (4).

16. Moule de coulée selon la revendication 15, **caractérisé en ce que** l'évidement (20) est formé dans l'une des deux couches métalliques (6).

17. Moule de coulée selon la revendication 15 ou 16, **caractérisé en ce qu'**au moins une couche métallique ou la couche métallique (6) de la partie de moule (3) contre laquelle la pièce d'insertion (23) est déplacée est déformable au moins partiellement afin de modifier le volume de la cavité de coulée (4).

18. Moule de coulée selon la revendication 17, **caractérisé en ce que** la partie de moule (3) présente une couche intermédiaire plane (9) constituée d'un matériau élastiquement déformable et compressible, contre laquelle la couche métallique (6) de la partie de moule (3) peut être déplacée avec génération d'une force de rappel par la couche intermédiaire (9) qui se déforme.

19. Moule de coulée selon l'une des revendications 1 à 14, **caractérisé en ce qu'**au moins une partie de moule (2, 3) est mobile par rapport à l'autre partie de moule (2, 3) afin de modifier le volume de la cavité de coulée (4).
